# EUROPEAN PATENT APPLICATION

(11) **EP 4 775 446 A1**
(43) Date of publication of application: **15.07.2026**
(21) Application number: 25220403.7
(22) Date of filing: 03.12.2025
(51) Int. Cl.: B60N 2/90

(54) **MULTI-PULSE MASSAGER**

(30) Priority: 09.01.2025 US 202519014391
(71) Applicant: Lear Corporation, Southfield, MI 48033 (US)
(72) Inventor: Blair, Samuel, Rochester, MI, 48306 (US); Kasperczyk, Grzegorz, 01-164 Warszawa (PL); Abdella, David J., Farmington Hills, MI, 48336 (US); Wright, John Paul, Tamworth, Staffordshire, B79 8PG (GB)
(74) Representative: Grünecker Patent- und Rechtsanwälte PartG mbB

(57) **Abstract**

A system includes one or more primary fluid bladders in fluid communication with a fluid supply source, and at least one secondary fluid bladder supported on one of the one or more primary fluid bladders. The at least one secondary fluid bladder has a smaller fluid volume than the one or more primary fluid bladders.

## Description

### BACKGROUND

Seats may include bladders that are configured in a comfort assembly installed within a seat cushion or seat back. The bladders may inflate and deflate to provide a massage effect.

### BRIEF DESCRIPTION OF THE DRAWINGS

Figure 1 is a perspective view of an example seat with a comfort assembly.
Figure 2 is a front view of a seat back with a trim cover removed to show an example of a comfort assembly.
Figure 3 is a top perspective view of a primary bladder with a plurality of secondary fluid bladders as used in the comfort assembly of Figure 3.
Figure 4 is a schematic view of another type of connection interface between the primary bladder and the plurality of secondary fluid bladders.
Figure 5 is a schematic view of a multi-chamber bladder.
Figure 6 is a schematic view of a single chamber bladder.
Figure 7 is a schematic view of another example of a primary bladder with a plurality of secondary fluid bladders.
Figure 8 is a schematic view of another example of a primary bladder with a plurality of secondary fluid bladders.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

"One or more" includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

It should be understood that terms such as "about," "substantially," and "generally" are not intended to be boundaryless terms, and should be interpreted consistent with the way one skilled in the art would interpret those terms.

This disclosure relates to a fluid system that is comprised of one or more primary fluid bladders in fluid communication with a fluid supply and one or more secondary fluid bladders in fluid communication with one of the primary fluid bladders to provide a massaging effect.

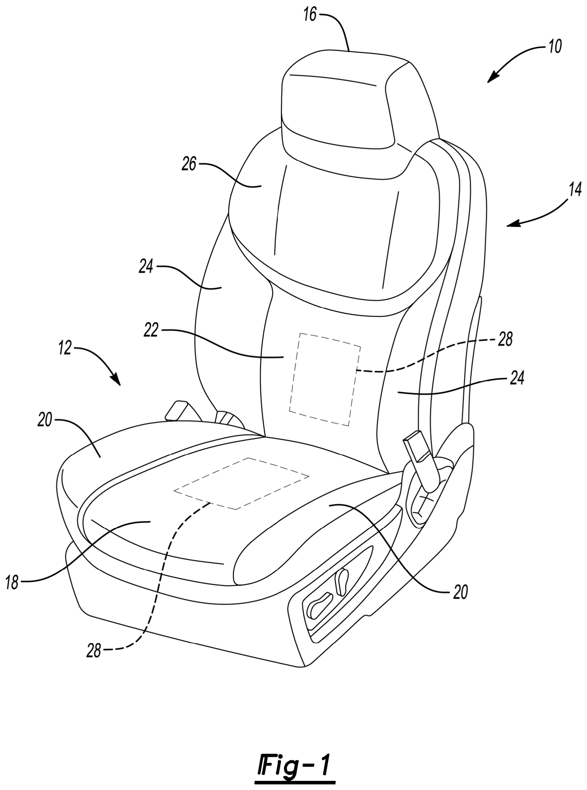

Figure 1 illustrates a seat assembly 10 according to one example embodiment. The seat assembly 10 may be utilized as a vehicle seat assembly 10 for seating in a vehicle, such as an automobile, an aircraft, a watercraft, or any other seating environment. The seat assembly 10 includes a seat bottom 12, which may be adapted to be mounted for motor-driven adjustable translation in a fore and aft direction and in an up and down direction of a vehicle. The seat assembly 10 includes a seat back 14, which may be pivotally connected to the seat bottom 12 to extend generally upright relative to the seat bottom 12 for pivotal adjustment relative to the seat bottom 12. A head restraint 16 may also be mounted to the seat back 14.

The seat bottom 12 includes a central seating surface 18 and a seating surface along a pair of side bolster regions 20 laterally spaced about the central seating surface 18. The seat back 14 includes a pelvic/lumbar seating surface 22 with a pair of laterally spaced apart side bolster regions 24 on either side. A thoracic/shoulder seating surface 26 is provided above the pelvic/lumbar seating surface 22 and the seating surface of seat back side bolster regions 24. It should be understood that this is just one example of a seat configuration, and that other configurations could also be utilized.

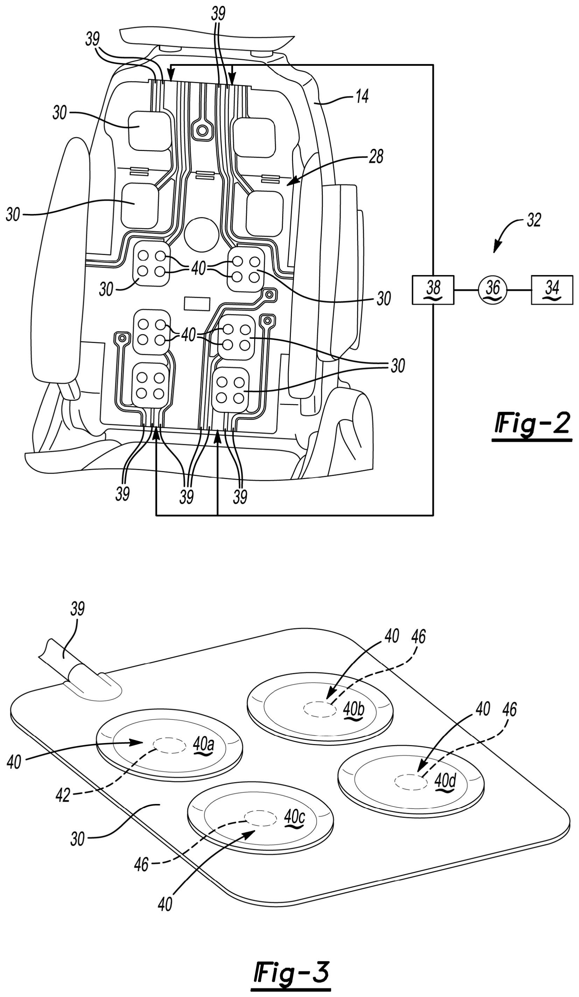

In implementations, the seat assembly 10 may include one or more comfort assemblies 28 (Figure 2) installed within the seat bottom 12 and/or the seat back 14. In one example, a comfort assembly 28 is configured to provide a massage effect with pulsing movement that is transferred through the seat bottom 12 or seat back 14 to an associated portion of a seated occupant.

In implementations, the comfort assembly 28 includes one or more primary fluid bladders 30 that are selectively inflatable via an actuator assembly 32, which is schematically shown in Figure 2. In implementations, the primary fluid bladders 30 comprise discrete inflatable/deflatable pouches or cells, and the actuator assembly 32 controls inflation and/or deflation of the primary bladder assemblies 30 via one or more controllers 34. The actuator assembly 32 may include a fluid supply source 36 that is connected to a valve assembly 38 to provide a source of fluid to the fluid bladders 30. In one example, the valve assembly 38 may comprise any type of valve assembly suitable for controlling flow from the fluid supply source 36 to the bladders 30, and the valve assembly 38 may comprise a single valve or multiple valves as needed. In implementations, the fluid supply source 36 may comprise a compressor, fan, air pump, blower, pump or pneumatic pump, for example.

In one example, the valve assembly 38 directs fluid into one or more fluid paths 39 that are associated with the bladders 30. The fluid paths 39 may be formed as tubes or conduits, for example.

In one example, the one or more controllers 34 regulate compressed air into and out of the primary bladders 30 in the seat assembly 10. The controller 34 and actuator 32 may be installed in the seat back 14, under the seat bottom 12, or anywhere suitable in the vehicle.

The one or more controllers 34 may include a processing unit and non-transitory memory for executing various control strategies. The processing unit can be a custom made or commercially available processor, a central processing unit (CPU), or generally any device for executing software instructions. The memory can include any one or combination of volatile memory elements and/or nonvolatile memory elements. The processing unit can be programmed to execute one or more programs stored in the memory. The programs may be stored in the memory as software code, for example. The programs stored in the memory may include one or more additional or separate programs, each of which includes an ordered list of executable instructions for implementing logical functions associated with controlling the valve assembly. While shown as a single controller, each controller 34 may be comprised of one or more controllers. The controller 34 may also be in communication with, and responsive to instructions from, another controller. Those skilled in the art who have the benefit of this description will be able to determine how to configure the one or more controllers 34 for the valve inflation purposes set forth below.

Figure 3 illustrates an example of a primary bladder 30 that is part of the comfort assembly 28 as installed within the seat assembly 10. In implementations, at least one secondary fluid bladder 40 is in fluid communication with the primary fluid bladder 30. Figure 3 shows a configuration where there are four secondary fluid bladders 40 associated with a primary fluid bladder 30; however, fewer or additional secondary fluid bladders 40 could be utilized dependent packaging and/or other design requirements or constraints.

In one example, the secondary fluid bladders 40 comprise a discrete inflatable/deflatable pouches or cells that are smaller in size than the primary fluid bladder 30.

In one example, the secondary fluid bladder 40 has a smaller fluid volume than the primary fluid bladder 30. For example, the amount of liquid/gas capable of being contained within a pouch that defines the secondary fluid bladder 40 may be less than the amount of liquid/gas capable of being contained within a pouch that defines the primary fluid bladder 30.

In implementations, the secondary fluid bladder 40 is fluidly connected to the primary fluid bladder 30 via a port 42 formed in the first primary fluid bladder 30. In one example, the port 42 comprises a fluid connection opening, aperture, slit, hole that provides an inlet/outlet for the primary fluid bladder 30.

In one example, there are a plurality of secondary fluid bladders 40 for each of the primary fluid bladders 30.

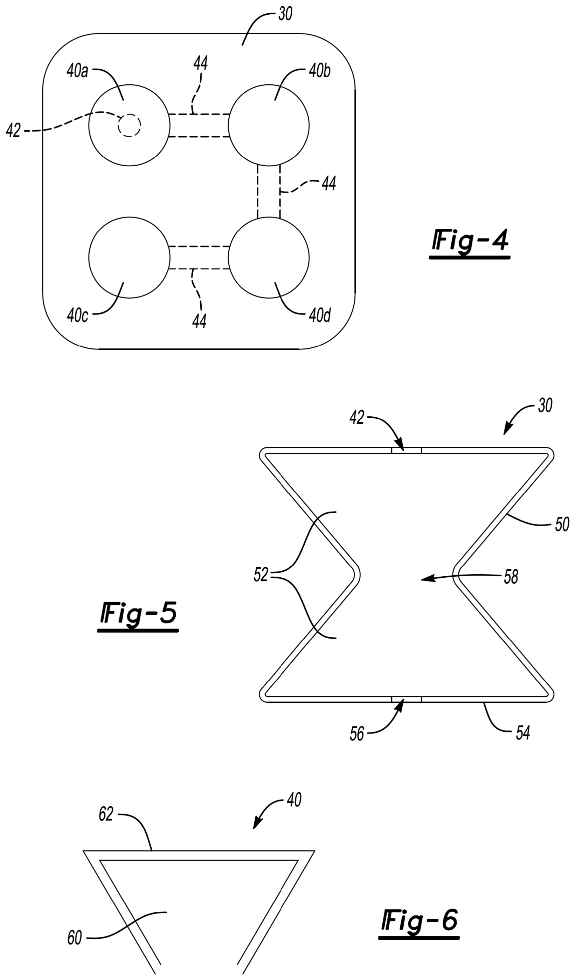

In implementations, the secondary fluid bladders 40 may inflate sequentially. For example, a first secondary fluid bladder 40a is connected to one primary fluid bladder 30 via the port 42, and any remaining secondary fluid bladders 40b, 40c, 40d are in fluid communication with the first secondary fluid bladder 40a in sequence via linear sequential connections 44 one after the other (see Figure 4). As such, the first secondary fluid bladder 40a would inflate before a second secondary fluid bladder 40b, the second secondary fluid bladder 40b would inflate before a third secondary fluid bladder 40c, and the third secondary fluid bladder 40c would inflate before a fourth secondary fluid bladder 40d.

In implementations, the linear sequential connections 44 may comprise separate tubular connections, or may be formed as part of the primary fluid bladder 30.

In other implementations, the secondary fluid bladders 40 may inflate directly from the primary fluid bladder 30. For example, one or more additional ports 46. e.g., openings that are is discrete from port 42, are formed in the primary fluid bladder 30 (see Figure 3). In this example, the first secondary fluid bladder 40a is connected to the primary fluid bladder 30 via the port 42. In implementations, each additional secondary fluid bladder 40b, 40c, 40d is directly connected to the primary fluid bladder 30 via one of the additional ports 46. As such, each secondary fluid bladder 40a, 40b, 40c, 40d is directly, fluidly connected to the primary fluid bladder 30.

In one example, inflation/deflation of one of the secondary fluid bladders 40a, 40b, 40c, 40d does not rely on inflation/deflation of another one of the secondary fluid bladders inflation/deflation. As such, each secondary fluid bladder 40a, 40b, 40c, 40d inflates and deflates independently of other secondary fluid bladders 40a, 40b, 40c, 40d. In other words, expansion and contraction movement of each secondary fluid bladder 40a, 40b, 40c, 40d is not tied to such movement of any other secondary fluid bladder 40a, 40b, 40c, 40d.

In implementations, the secondary fluid bladder 40 begins to inflate once a predetermined pressure is reached within the associated primary fluid bladder 30. In one example, expansion of the secondary fluid bladder 40 is not initiated until expansion of the primary fluid bladder 30 has reached a desired level.

In one example, the primary fluid bladders 30 comprise multi-chamber bladders 50 as shown in Figure 5. In one example, a plurality of fluid sub-cavities 52 are formed within a bladder pouch 54 that has an inlet 56 to the fluid supply 36. The fluid sub-cavities 52 are connected to each other via an internal port 58, and the multi-chamber bladder 50 connects to the secondary fluid bladder 40 via the port 42 or 46.

In one example, the secondary fluid bladder 40 comprises a single chamber bladder as shown in Figure 6. In this example, there is only one fluid cavity 60 within a bladder pouch 62.

In implementations, the secondary fluid bladders 40a, 40b, 40c, 40d are directly supported on the external surface of the primary fluid bladders 30 as shown in Figure 3. As such, the secondary fluid bladders 40a, 40b, 40c, 40d are directly, fluidly connected to the primary fluid bladder 30 without any other intervening fluid lines or other components.

In implementations, the secondary fluid bladders 40 may be connected or attached to the primary fluid bladders 30 by welding, gluing, taping, or other suitable attachment methods/structures.

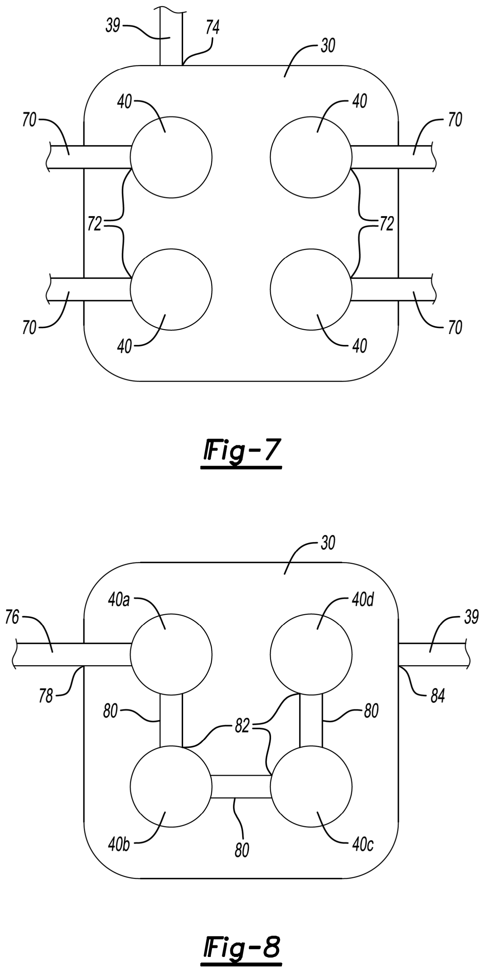

In another example, each secondary fluid bladder 40 may have a separate fluid connection or input 70 to the fluid supply source 36 as shown in Figure 7. In implementations, the valve assembly 38 directs fluid into fluid paths 39 that are associated with the fluid inputs 70, which then feed into inlets 72 for each secondary fluid bladder 40. In implementations, one fluid path 39 is connected to a separate inlet 74 for the primary fluid bladder 30. In this example, the secondary fluid bladders 40 are inflated independently of the associated primary fluid bladder 30.

In another example, one secondary fluid bladder 40a may have a separate fluid connection or input 76 to the fluid supply source 36 as shown in Figure 8. In implementations, the valve assembly 38 directs fluid into a fluid path 39 that is associated with the fluid input 76, which then feeds into an inlet 78 for the associated secondary fluid bladder 40a. In this example, any remaining secondary fluid bladders 40b, 40c, 40d are in fluid communication with the first secondary fluid bladder 40a in sequence via linear sequential connections 80, which feed into associated inlets 82 one after the other in a manner similar to that shown in Figure 4. In implementations, one fluid path 39 is connected to a separate inlet 84 for the primary fluid bladder 30. In this example, the secondary fluid bladders 40a, 40b, 40c, 40d are inflated independently of the associated primary fluid bladder 30.

In implementations, all of the primary fluid bladders 30 may include secondary fluid bladders 40. In other implementations, only some of the primary fluid bladders 30 may include secondary fluid bladders 40.

In implementations, there are a plurality of primary fluid bladders 30 (see Figure 2) and a plurality of secondary fluid bladders 40 are associated with each primary fluid bladder 30.

In implementations, a system comprises one or more primary fluid bladders in fluid communication with a fluid supply source, and at least one secondary fluid bladder supported on one of the one or more primary fluid bladders, wherein the at least one secondary fluid bladder has a smaller fluid volume than the one or more primary fluid bladders.

The system may include any of the following features either alone or in any combination thereof. In one example, each primary fluid bladder has a primary fluid inlet in communication with the fluid supply source, and the at least one secondary fluid bladder has a secondary fluid inlet in communication with the fluid supply source that is independent from the primary fluid inlet associated with the one or more primary fluid bladders.

In one example, the at least one secondary fluid bladder is in fluid communication with one of the one or more primary fluid bladders, and the one or more primary fluid bladders comprises at least a first primary fluid bladder, and wherein the at least one secondary fluid bladder is fluidly connected to the first primary fluid bladder via a port formed in the first primary fluid bladder.

In one example, the at least one secondary fluid bladder comprises a plurality of secondary fluid bladders.

In one example, a first secondary fluid bladder of the plurality of secondary fluid bladders is connected to the first primary fluid bladder via the port and any remaining secondary fluid bladders of the plurality of secondary fluid bladders are in fluid communication with the first secondary fluid bladder in a sequence via linear sequential connections one after another.

In one example, the system includes one or more additional ports formed in the first primary fluid bladder, and wherein each secondary fluid bladder of the plurality of secondary fluid bladders is connected to the first primary fluid bladder via one of the one or more additional ports.

In one example, each secondary fluid bladder of the plurality of secondary fluid bladders inflates in sequence.

In one example, each secondary fluid bladder of the plurality of secondary fluid bladders inflates and deflates independently of other secondary fluid bladders.

In one example, wherein the at least one secondary fluid bladder is in fluid communication with one of the one or more primary fluid bladders, and the at least one secondary fluid bladder begins to inflate once a predetermined pressure is reached within the one or more primary fluid bladders.

In one example, the one or more primary fluid bladders comprise multi-chamber bladders and the at least one secondary fluid bladder comprises a single chamber bladder.

In one example, the at least one secondary fluid bladder is directly supported on the one or more primary fluid bladders.

In one example, the one or more primary fluid bladders comprise a plurality of primary fluid bladders and the at least one secondary fluid bladder comprises a plurality of secondary fluid bladders, and wherein multiple secondary fluid bladders are associated with each primary fluid bladder.

In one example, the fluid supply source comprises a pump that supplies fluid to the one or more primary fluid bladders via at least one valve.

In one example, the at least one secondary fluid bladder and the one or more primary fluid bladders comprise a massage assembly that is associated with at least one seat component.

In implementations, a seat assembly comprises: a seat cushion; a seat back associated with the seat cushion; a seat comfort assembly mounted within at least one of the seat cushion and the seat back, wherein the seat comfort assembly comprises: one or more primary fluid bladders; and at least one secondary fluid bladder supported on one of the one or more primary fluid bladders, wherein the at least one secondary fluid bladder has a smaller fluid volume than the one or more primary fluid bladders; a fluid supply source in fluid communication with the one or more primary fluid bladders; at least one valve fluidly connecting the fluid supply source to the one or more primary fluid bladders; and one or more controllers selectively controlling the at least one valve between an inflate condition and a deflate condition.

The system may include any of the following features either alone or in any combination thereof. In one example, the one or more primary fluid bladders comprise a plurality of primary fluid bladders and the at least one secondary fluid bladder comprises a plurality of secondary fluid bladders, and wherein multiple secondary fluid bladders are associated with each primary fluid bladder.

In one example, the at least one secondary fluid bladder is in fluid communication with one of the one or more primary fluid bladders such that the at least one secondary fluid bladder is inflated by the one of the one or more primary fluid bladders; or wherein each primary fluid bladder has a primary fluid inlet in communication with the fluid supply source, and the at least one secondary fluid bladder has a secondary fluid inlet in communication with the fluid supply source that is independent from the primary fluid inlet associated with the one or more primary fluid bladders.

In implementations, a method comprises: fluidly connecting one or more primary fluid bladders with a fluid supply source; supporting at least one secondary fluid bladder on the one or more primary fluid bladders, wherein the at least one secondary fluid bladder has a smaller fluid volume than the one or more primary fluid bladders; and inflating the one or more primary fluid bladders to a predetermined pressure level before inflating the at least one secondary fluid bladder.
The method may include any of the following features either alone or in any combination thereof. In one example, the one or more primary fluid bladders comprises at least a first primary fluid bladder, and wherein the at least one secondary fluid bladder comprises at least a first secondary fluid bladder and a second secondary fluid bladder, and the method includes: fluidly connecting the first and second secondary fluid bladders with the first primary fluid bladder; and inflating the first and second secondary fluid bladders via fluid supplied by the first primary fluid bladder.

In one example, the method includes providing the one or more primary fluid bladders with a primary fluid inlet in communication with the fluid supply source; providing the at least one secondary fluid bladder with a secondary fluid inlet in communication with the fluid supply source that is independent from the primary fluid inlet associated with the one or more primary fluid bladders; and independently inflating the at least one secondary fluid bladder and the one or more primary fluid bladders from each other.

Although the different examples have the specific components shown in the illustrations, embodiments of this disclosure are not limited to those particular combinations. It is possible to use some of the components or features from one of the examples in combination with features or components from another one of the examples. In addition, the various figures accompanying this disclosure are not necessarily to scale, and some features may be exaggerated or minimized to show certain details of a particular component or arrangement.

One of ordinary skill in this art would understand that the above-described embodiments are exemplary and non-limiting. That is, modifications of this disclosure would come within the scope of the claims. Accordingly, the following claims should be studied to determine their true scope and content.

## Claims

1. A system comprising:
one or more primary fluid bladders in fluid communication with a fluid supply source; and
at least one secondary fluid bladder supported on one of the one or more primary fluid bladders, wherein the at least one secondary fluid bladder has a smaller fluid volume than the one or more primary fluid bladders.

2. The system of claim 1, wherein each primary fluid bladder has a primary fluid inlet in communication with the fluid supply source, and the at least one secondary fluid bladder has a secondary fluid inlet in communication with the fluid supply source that is independent from the primary fluid inlet associated with the one or more primary fluid bladders.

3. The system of claim 1, wherein the at least one secondary fluid bladder is in fluid communication with one of the one or more primary fluid bladders, and wherein the one or more primary fluid bladders comprises at least a first primary fluid bladder, and wherein the at least one secondary fluid bladder is fluidly connected to the first primary fluid bladder via a port formed in the first primary fluid bladder.

4. The system of claim 3, wherein the at least one secondary fluid bladder comprises a plurality of secondary fluid bladders.

5. The system of claim 4, wherein a first secondary fluid bladder of the plurality of secondary fluid bladders is connected to the first primary fluid bladder via the port and any remaining secondary fluid bladders of the plurality of secondary fluid bladders are in fluid communication with the first secondary fluid bladder in a sequence via linear sequential connections one after another,
and/or wherein the system includes one or more additional ports formed in the first primary fluid bladder, and each secondary fluid bladder of the plurality of secondary fluid bladders is connected to the first primary fluid bladder via one of the one or more additional ports.

6. The system of claim 4, wherein each secondary fluid bladder of the plurality of secondary fluid bladders inflates in sequence,
or wherein each secondary fluid bladder of the plurality of secondary fluid bladders inflates and deflates independently of other secondary fluid bladders.

7. The system of any of the preceding claims, wherein the at least one secondary fluid bladder is in fluid communication with one of the one or more primary fluid bladders, and wherein the at least one secondary fluid bladder begins to inflate once a predetermined pressure is reached within the one or more primary fluid bladders,
and/or wherein the one or more primary fluid bladders comprise multi-chamber bladders and the at least one secondary fluid bladder comprises a single chamber bladder.

8. The system of any of the preceding claims, wherein the at least one secondary fluid bladder is directly supported on the one or more primary fluid bladders,
and/or wherein the one or more primary fluid bladders comprise a plurality of primary fluid bladders and the at least one secondary fluid bladder comprises a plurality of secondary fluid bladders, and wherein multiple secondary fluid bladders are associated with each primary fluid bladder.

9. The system of any of the preceding claims, wherein the fluid supply source comprises a pump that supplies fluid to the one or more primary fluid bladders via at least one valve,
and/or wherein the at least one secondary fluid bladder and the one or more primary fluid bladders comprise a massage assembly that is associated with at least one seat component.

10. A seat assembly comprising:
a seat cushion;
a seat back associated with the seat cushion;
a seat comfort assembly mounted within at least one of the seat cushion and the seat back, wherein the seat comfort assembly comprises:
one or more primary fluid bladders; and
at least one secondary fluid bladder supported on one of the one or more primary fluid bladders, wherein the at least one secondary fluid bladder has a smaller fluid volume than the one or more primary fluid bladders;
a fluid supply source in fluid communication with the one or more primary fluid bladders;
at least one valve fluidly connecting the fluid supply source to the one or more primary fluid bladders; and
one or more controllers selectively controlling the at least one valve between an inflate condition and a deflate condition.

11. The seat assembly of claim 10, wherein the one or more primary fluid bladders comprise a plurality of primary fluid bladders and the at least one secondary fluid bladder comprises a plurality of secondary fluid bladders, and wherein multiple secondary fluid bladders are associated with each primary fluid bladder.

12. The seat assembly of claim 10 or 11, wherein:
the at least one secondary fluid bladder is in fluid communication with one of the one or more primary fluid bladders such that the at least one secondary fluid bladder is inflated by the one of the one or more primary fluid bladders; or
wherein each primary fluid bladder has a primary fluid inlet in communication with the fluid supply source, and the at least one secondary fluid bladder has a secondary fluid inlet in communication with the fluid supply source that is independent from the primary fluid inlet associated with the one or more primary fluid bladders.

13. A method comprising:
fluidly connecting one or more primary fluid bladders with a fluid supply source;
supporting at least one secondary fluid bladder on the one or more primary fluid bladders, wherein the at least one secondary fluid bladder has a smaller fluid volume than the one or more primary fluid bladders; and
inflating the one or more primary fluid bladders to a predetermined pressure level before inflating the at least one secondary fluid bladder.

14. The method of claim 13, wherein the one or more primary fluid bladders comprises at least a first primary fluid bladder, and wherein the at least one secondary fluid bladder comprises at least a first secondary fluid bladder and a second secondary fluid bladder, and including:
fluidly connecting the first and second secondary fluid bladders with the first primary fluid bladder; and
inflating the first and second secondary fluid bladders via fluid supplied by the first primary fluid bladder.

15. The method of claim 13 or 14, including:
providing the one or more primary fluid bladders with a primary fluid inlet in communication with the fluid supply source;
providing the at least one secondary fluid bladder with a secondary fluid inlet in communication with the fluid supply source that is independent from the primary fluid inlet associated with the one or more primary fluid bladders; and
independently inflating the at least one secondary fluid bladder and the one or more primary fluid bladders from each other.
